# FASCICULE DE BREVET EUROPEEN

(11) **EP 0 631 914 B1**
(45) Date de publication et mention de la délivrance du brevet: **13.08.1997**
(21) Numéro de dépôt: 94109992.1
(22) Date de dépôt: 28.06.1994
(51) Int. Cl.: B60S 1/38

(54) **Dispositif d'essuie-glace à articulation d'éléments**
Scheibenwischer mit gelenkig verbundenen Elementen
Windscreen wiper with articulated elements

(30) Priorité: 01.07.1993 FR 9308065
(43) Date de publication de la demande: 04.01.1995
(73) Titulaire: VALEO SYSTEMES D'ESSUYAGE, 78180 Montigny-Le-Bretonneux (FR)
(72) Inventeur: Teindas, Jean-Louis, F-63190 Lezoux (FR)
(74) Mandataire: Gamonal, Didier

(56) Documents cités:
- EP-A- 0 286 231
- FR-A- 2 415 563
- US-A- 4 909 653

## Description

La présente invention concerne un dispositif d'essuie-glace du type comportant un système de palonnier constitué par un premier élément présentant une section en U et un second élément reçu dans le U du premier élément en y interposant une pièce intercalaire portant sur ses parois latérales une couronne.

Comme mieux décrit dans la demande de brevet français FR-A-2 415 563, il est prévu de faire coïncider les couronnes de la pièce intercalaire avec des alésages prévus sur chaque élément.

Comme cela est mieux représenté sur le document FR-A-2 443 949, pour pouvoir disposer cette pièce intercalaire entre le U du premier élément et le U du deuxième élément il est prévu, dans un premier temps, de faire coïncider les couronnes dites internes avec les alésages prévus sur le second élément et d'écarter les parois latérales du premier élément de façon à pouvoir autoriser la pénétration des couronnes extérieures de la pièce intercalaire dans les alésages prévus sur les parois latérales du premier élément.

Ce mode de réalisation entraîne une complication de montage de deux éléments car il est nécessaire d'élargir la distance entre les deux parois latérales du premier élément puis de ramener à un écart souhaité les deux parois. De plus, lors de cette opération, il peut arriver que les deux parois latérales soient ramenées au-delà de l'écart désiré ce qui peut amener une déformation non souhaitée de la pièce intercalaire et nuire au bon fonctionnement de l'articulation entre le premier et le second élément.

Le but de la présente invention est de remédier à ces inconvénients et en particulier de faciliter l'assemblage des différents éléments et d'éviter la déformation des pièces lors de la mise en place de la pièce intercalaire.

L'invention concerne plus particulièrement un dispositif d'essuie-glace, notamment pour véhicule automobile, comportant un système de palonnier constitué par un premier élément présentant une section en U et un second élément reçu dans le U du premier élément en y interposant une pièce intercalaire présentant des parois latérales interposées entre les parois latérales des premier et second éléments, la pièce intercalaire portant sur ses parois latérales des couronnes annulaires coopérant avec des alésages prévus sur le parois latérales des premier et second éléments, caractérisé en ce que l'un des éléments présente sur chacune de ses parois un alésage ouvert sur un évidement s'étendant jusqu'à l'un des bords libres de ladite paroi et en ce que la pièce intercalaire porte une protubérance de forme correspondant à celle de l'évidement.

Grâce à l'invention, il n'est plus nécessaire de déformer le premier élément en forme de U en écartant les parois latérales, il suffit dans ce cas de faire coopérer les couronnes de la pièce intercalaire avec l'évidement pour que ces dernières puissent venir se loger dans les alésages prévus sur les parois du premier élément en U.

De plus, la pièce intercalaire est immobilisée en rotation par rapport à l'élément qui la porte.

Selon un mode de réalisation de l'invention, l'intersection entre l'alésage et l'évidement présente une largeur inférieure au diamètre extérieur de la couronne.

Grâce à cette disposition, la pièce intercalaire est immobilisée dans le premier élément en forme de U.

Selon un autre autre mode de réalisation de l'invention, les couronnes sont réalisées en un matériau déformable élastiquement.

Grâce à cette caractéristique, la mise en place de la couronne dans les alésages se fera d'une manière simple.

Selon un autre mode de réalisation de l'invention, le dispositif d'essuie-glace comporte un axe rigide traversant l'ensemble des couronnes.

De ce fait, tout enlèvement de la pièce intercalaire par rapport au premier élément sera impossible puisque la déformation des couronnes sera empêchée par l'axe lisse.

Selon une autre mode de réalisation de l'invention, les évidements s'élargissent depuis l'alésage jusqu'au bord de la paroi.

De par cette caractéristique, l'engagement de la couronne dans le premier élément sera facilité par la configuration de la découpe.

Les autres caractéristiques et avantages de l'invention vont ressortir maintenant de la description qui va suivre en se référant aux dessins donnés à titre d'exemple et sur lesquels :
- la figure 1 est une vue frontale d'un dispositif d'essuie-glace selon la présente invention ;
- la figure 2 est une vue en coupe selon la ligne AA de la figure 1 ;
- la figure 3 montre une vue en élévation de la pièce intercalaire utilisée pour la présente invention ;
- la figure 4 est une vue frontale selon la figure 3 ;
- la figure 5 est une vue partielle d'un des éléments nécessaires à la présente invention ;
- la figure 6 est une vue en coupe partielle montrant la disposition de deux pièces de la présente invention.

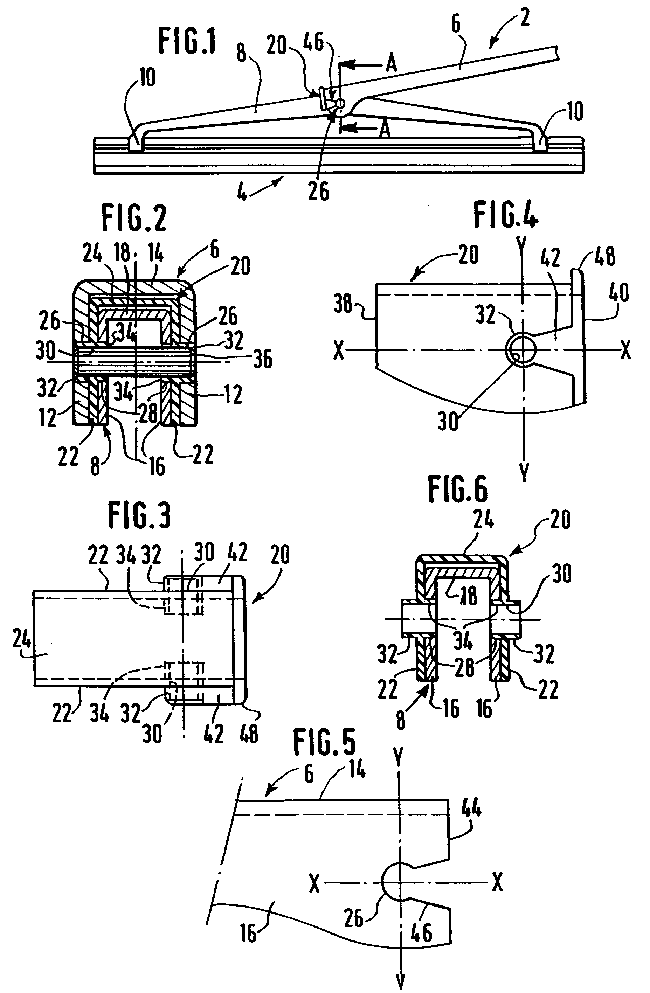

On se réfère maintenant aux figures 1 et 2 qui montrent un dispositif d'essuie-glace selon la présente invention et qui comporte un balai d'essuie-glace constitué d'une monture porteuse 2 d'une lame d'essuie-glace 4, ladite monture porteuse étant constituée d'un système de palonnier comportant, dans l'exemple décrit, un premier élément 6, dit étrier principal, et un second élément 8, dit étrier secondaire, cet étrier secondaire portant à ses extrémités libres des griffes 10 aptes à porter la lame d'essuie-glace 4.

En se référant à la figure 2, l'étrier principal 6 présente une section en forme de U inversé avec deux parois latérales 12 réunies par un dos 14 de manière sensiblement orthogonale alors que l'étrier secondaire 8, également de section en forme de U inversé, comporte deux parois latérales 16 ainsi qu'un dos 18.

Comme mieux visible sur cette figure, l'étrier secondaire 8 est apte à être reçu à l'intérieur du U de l'étrier principal 6 en interposant entre les deux étriers une pièce intercalaire 20, plus communément appelée pièce anti-bruit.

Cette pièce anti-bruit présente en section également une forme de U inversé avec deux parois latérales 22 et un dos 24, les parois latérales 22 étant interposées entre les parois latérales 12, 16 des étriers et le dos 24 étant interposé entre les dos 14, 18 des étriers.

Comme visible sur la figure 2, les parois latérales 12, 16 des étriers 6, 8 présentent des alésages respectivement 26, 28 alignés les uns avec les autres lorsque les deux étriers sont assemblés.

De plus, les parois latérales 22 de la pièce intercalaire 20 comportent un alésage 30 se prolongeant par des couronnes annulaires 32, 34, les couronnes annulaires 32 étant dénommées couronnes annulaires extérieures alors que les couronne annulaires 34 sont dénommées couronnes annulaires intérieures, lesdites couronnes ayant un diamètre intérieur égal à l'alésage 30 et un diamètre extérieur égal pour les couronnes 32 aux alésages 26 de l'étrier principal et pour la couronne intérieure 34 aux alésages 28 de l'étrier secondaire.

En outre, un axe 36 est prévu pour assurer l'articulation entre l'étrier principal et l'étrier secondaire, cet axe 36 traversant les alésages 30 se poursuivant par les couronnes annulaires 32, 34.

On se réfère maintenant aux figures 3 et 4 qui montrent plus précisément la constitution de la pièce intercalaire 20 et qui comporte donc un dos 24 se poursuivant de manière sensiblement orthogonale par deux parois latérales 22 en étant limités, en considérant l'axe horizontal XX représenté sur la figure 4, par un bord arrière 38 sensiblement orthogonal à l'axe XX et par un bord avant 40 également sensiblement orthogonal à l'axe XX.

Comme déjà décrit les parois latérales 22 portent un alésage 30 se poursuivant vers l'extérieur des parois latérales 22 par des couronnes annulaires extérieures 32 et vers l'intérieur du U que forme la pièce intercalaire, par des couronnes annulaires intérieures 34.

Les couronnes annulaires extérieures 32 se poursuivent, dans une direction sensiblement horizontale celle correspondant à l'axe XX, par une protubérance 42 prenant naissance à partir de la couronne 32 et aboutissant au bord avant 40.

Comme visible sur ces figures, la protubérance 42 présente une forme trapézoïdale isocèle dont la grande base est confondue avec le bord avant 40 et dont la petite base rejoint la couronne annulaire extérieure 32 en formant ainsi des côtés inclinés allant en augmentant de la couronne annulaire extérieure 32 jusqu'au bord avant 30.

En se référant à la figure 5, l'un des deux éléments formant le dispositif d'essuie-glace, ici cet élément étant dénommé étrier principal 2, présente un dos 14 et deux ailes 16 sensiblement orthogonales au dos 14.

Comme déjà décrit, les parois latérales 12 portent un alésage 26 disposé en retrait par rapport à l'extrémité 44 de l'étrier 2.

Les parois latérales 16 portent un évidement 46 dont la forme est complémentaire à celle de la protubérance 42 portée par la pièce intercalaire 20.

Plus précisément cet évidement 46 est un évidement en forme de trapèze isocèle dont la grande base débouche sur l'extrémité 44 de l'étrier et dont la petite base rejoint l'alésage 26 porté par les parois 16, l'intersection entre l'alésage 26 et l'évidement 46 étant telle que la largeur est inférieure au diamètre extérieur des couronnes 32.

Ainsi, grâce à cette disposition, on obtient sur les parois 16 de l'étrier principal une découpe qui correspond sensiblement à une forme en "trou de serrure" formé par un alésage 26 se poursuivant par l'évidement 46.

Pour réaliser le montage permettant d'arriver au dispositif selon l'invention, et cela en se référant à la figure 6, il est prévu de monter la pièce intercalaire 20, qui est constituée dans une matière plastique élastiquement déformable, sur l'étrier secondaire 8 en faisant chevaucher ladite pièce sur ledit étrier puis de faire glisser les couronnes annulaires intérieures 34 le long des parois latérales 22 de l'étrier secondaire jusqu'à ce que ces couronnes annulaires viennent coopérer avec les alésages 28 prévus sur lesdites parois.

Une fois cet assemblage réalisé, il suffit de faire coopérer les couronnes annulaires extérieures 32 avec les bords inclinés de l'évidement 46 prévu sur l'étrier principal jusqu'à ce que, par déformation de la forme constitutive des couronnes annulaires extérieures 32, lorsque ces dernières vont arriver à la ligne de jonction entre l'alésage 26 et l'évidement 46, ligne de jonction qui est de dimension plus petite que le diamètre des couronnes celles-ci vont s'effacer élastiquement au niveau de cette jonction pour ensuite reprendre leur état intial à l'intérieur de l'alésage 26.

Dans cette position, la protubérance 42 de la pièce intercalaire 20, coopère avec l'évidement 46 prévu sur l'étrier principal et plus précisément les bords inclinés de cette protubérance vont s'appuyer sur les bords inclinés de l'évidement 46 et le bord avant 40 de ladite pièce présentant un bourrelet 48 de hauteur correspondant sensiblement à la hauteur de la protubérance 42 tout en s'étendant le long de la section en U de la pièce intercalaire va s'appuyer par sa face arrière 50 contre l'extrémité 44 de l'étrier 2.

Ainsi, la pièce intercalaire 20 est immobilisée en translation par coopération des couronnes 32 et de l'alésage 26 associés éventuellement au contact du bourrelet 48 avec l'extrémité 44 et en rotation par coopération de l'évidement 46 avec la protubérance 42.

Après avoir réalisé cet assemblage, et en se référant à nouveau à la figure 2, il est prévu de faire glisser un axe 36 à l'intérieur des alésages 30 que présente la pièce intercalaire, cet axe 30 ayant pour rôle essentiel d'empêcher la déformation des couronnes annulaires extérieures en cas de manoeuvre inconsidérée sur cet assemblage.

Ainsi, grâce à cette invention, il est obtenu un assemblage très simple des différents éléments constitutifs d'un balai d'essuie-glace, cet assemblage étant réalisé par un simple clipsage ou encliquetage de la pièce intercalaire sur l'étrier principal.

Bien entendu, la présente invention n'est pas limitée aux exemples de réalisation décrits jusqu'à maintenant mais englobe toute variante.

Notamment, il a été décrit jusqu'à maintenant un dispositif d'essuie-glace comportant un étrier principal et un étrier secondaire mais il peut être envisagé d'autres dispositifs tels que ceux notamment où il est nécessaire d'avoir un assemblage entre un étrier principal et un étrier secondaire, ledit étrier secondaire étant à même de porter un système de palonnier par ses extrémités libres.

De même, il a été décrit une protubérance 42 ainsi qu'un évidement 46 s'étendant sensiblement horizontalement selon l'axe XX de la figure 4 mais il peut être envisagé toute autre direction notamment celle symbolisée sur les figures 4, 5 par le trait d'axe XX, c'est-à-dire une direction verticale, en ayant une protubérance 42 disposée sensiblement verticale comme cela est représenté en traits pointillés sur la figure 4 et un évidement 46 disposé également verticalement comme cela est symbolisé sur la figure 5 par des traits pointillés.

## Revendications

1. Dispositif d'essuie-glace, notamment pour véhicule automobile, comportant un système de palonnier constitué par un premier élément (6) présentant une section en U et un second élément (8) reçu dans le U du premier élément en y interposant une pièce intercalaire (20) présentant des parois latérales (22) interposées entre les parois latérales (12,16) des premier et second éléments, la pièce intercalaire (20) portant sur ses parois latérales des couronnes annulaires (32,34) coopérant avec des alésages (26, 28) prévus sur les parois latérales (12, 16) des premier et second éléments (6, 8), caractérisé en ce que l'un des éléments (6) présente sur chacune des parois latérales (12) un alésage (26) ouvert sur un évidement (46) s'étendant jusqu'à l'un des bords libres (44) de ladite paroi et en ce que la pièce intercalaire (20) porte une protubérance (42) de forme correspondant à celle de l'évidement (46).

2. Dispositif d'essuie-glace selon la revendication 1, caractérisé en ce que l'intersection entre l'alésage (26) et l'évidement (46) présente une largeur inférieure au diamètre extérieur de la couronne annulaire (32).

3. Dispositif d'essuie-glace selon l'une des revendications précédentes, caractérisé en ce que les couronnes annulaires (32,34) sont réalisées en un matériau déformable élastiquement.

4. Dispositif d'essuie-glace selon la revendication 1, caractérisée en ce que la protubérance (42) prend naissance à partir de la couronne annulaire (32) pour aboutir sur l'un des bords de ladite pièce intercalaire.

5. Dispositif d'essuie-glace selon l'une des revendications précédentes, caractérisé en ce que les évidements (46) s'élargissent depuis l'alésage (26) jusqu'au bord (44).

6. Dispositif d'essuie-glace selon l'une des revendications précédentes, carractérisé en ce que l'évidement (46) s'étend sensiblement horizontalement.

7. Dispositif d'essuie-glace selon l'une des revendications 1 à 5, caractérisé en ce que l'évidement (46) s'étend sensiblement verticalement.

8. Dispositif d'essuie-glace selon l'une des revendications précédentes, caractérisé en ce qu'un axe (36) traverse l'ensemble des couronnes (32,34).

## Claims

1. A screen wiper, especially for a motor vehicle, which includes a swinging linkage comprising a first element (6) having a U-shaped cross section and a second element (8) received in the U of the first element, with, interposed between them, an insert piece (20) having side walls (22) which are interposed between the side walls (12, 16) of the first and second elements, the insert piece (20) carrying on its side walls annular bushes (32, 34) cooperating with through holes (26, 28) provided on the side walls (12, 16) of the first and second elements (6, 8), characterised in that one of the elements (6) has on each of its side walls (12) a through hole (26) which is open through an aperture (46) extending to one of the free edges (44) of the said wall, and in that the insert piece (20) carries a projecting element (42), the shape of which corresponds to that of the aperture (46).

2. A screen wiper according to Claim 1, characterised in that the intersection between the through hole (26) and the aperture (46) has a width smaller than the external diameter of the annular bush (32).

3. A screen wiper according to one of the preceding Claims, characterised in that the annular bushes (32, 34) are made of a resiliently deformable material.

4. A screen wiper according to Claim 1, characterised in that the projecting element (42) extends from the annular bush (32), to terminate on one of the edges of the said insert piece.

5. A screen wiper according to one of the preceding Claims, characterised in that the width of the apertures (46) increases from the through hole (26) to the edge (44).

6. A screen wiper according to one of the preceding Claims, characterised in that the aperture (46) extends substantially horizontally.

7. A screen wiper according one of Claims 1 to 5, characterised in that the aperture (46) extends substantially vertically.

8. A screen wiper according to one of the preceding Claims, characterised in that a pivot pin (36) passes through both bushes (32, 34).

## Patentansprüche

1. Scheibenwischer, insbesondere für Kraftfahrzeuge, umfassend ein Krallenbügelsystem, das aus einem ersten Element (6) mit einem U-förmigen Querschnitt und aus einem zweiten Element (8) besteht, das in das U-Profil des ersten Elements unter Einfügung eines Einsatzstücks (20) eingesetzt ist, das Seitenwände (22) aufweist, die zwischen den Seitenwänden (12, 16) des ersten und zweiten Elements eingefügt sind, wobei das Einsatzstück (20) an seinen Seitenwänden ringförmige Einfassungen (32, 34) trägt, die mit Bohrungen (26, 38) zusammenwirken, die an den Seitenwänden (12, 16) des ersten und zweiten Elements (6, 8) vorgesehen sind, **dadurch gekennzeichnet**, daß eines der Elemente (6) auf jeder seiner Seitenwände (12) eine Bohrung (26) aufweist, die zu einer Aussparung (46) offen ist, die sich bis zu einer der freien Kanten (44) der besagten Wand erstreckt, und daß das Einsatzstück (20) eine Ausstülpung (42) mit einer Form trägt, die der Form der Aussparung (46) entspricht.

2. Scheibenwischer nach Anspruch 1 , **dadurch gekennzeichnet**, daß die Schnittfläche zwischen der Bohrung (26) und der Aussparung (46) eine Breite aufweist, die kleiner als der Außendurchmesser der ringförmigen Einfassung (32) ist.

3. Scheibenwischer nach einem der vorangehenden Ansprüche , **dadurch gekennzeichnet**, daß die ringförmigen Einfassungen (32, 34) aus einem elastisch verformbaren Werkstoff ausgeführt sind.

4. Scheibenwischer nach Anspruch 1 , **dadurch gekennzeichnet**, daß die Ausstülpung (42) von der ringförmigen Einfassung (32) ausgeht, um zu einer der Kanten des besagten Einsatzstücks zu führen.

5. Scheibenwischer nach einem der vorangehenden Ansprüche , **dadurch gekennzeichnet,** daß sich die Aussparungen (46) von der Bohrung (26) bis zur Kante (44) erweitern.

6. Scheibenwischer nach einem der vorangehenden Ansprüche , **dadurch gekennzeichnet**, daß sich die Aussparung (46) in etwa horizontal erstreckt.

7. Scheibenwischer nach einem der Ansprüche 1 bis 5, **dadurch gekennzeichnet**, daß sich die Aussparung (46) in etwa vertikal erstreckt.

8. Scheibenwischer nach einem der vorangehenden Ansprüche , **dadurch gekennzeichnet**, daß eine Achse (36) durch die Gesamtheit der Einfassungen (32, 34) hindurchgeht.
